# EUROPÄISCHE PATENTSCHRIFT

(11) **EP 4 430 010 B1**
(45) Veröffentlichungstag und Bekanntmachung des Hinweises auf die Patenterteilung: **12.03.2025**
(21) Anmeldenummer: 24702768.3
(22) Anmeldetag: 30.01.2024
(51) Int. Cl.: C04B 2/12

(54) **OFEN UND VERFAHREN ZUM BRENNEN VON KARBONATGESTEIN**
KILN AND METHOD FOR BURNING CARBONATE ROCK
FOUR ET PROCÉDÉ DE COMBUSTION DE ROCHE CARBONATÉE

(30) Priorität: 01.02.2023 DE 102023102446; 01.02.2023 BE 202305063
(43) Veröffentlichungstag der Anmeldung: 18.09.2024
(73) Patentinhaber: Maerz Ofenbau AG, 8002 Zürich (CH); thyssenkrupp Polysius GmbH, 59269 Beckum (DE); thyssenkrupp AG, 45143 Essen (DE)
(72) Erfinder: PIRINGER, Hannes, 5712 Beinwil am See (CH); BUCHER, Patrick, 5012 Schönenwerd (CH)
(74) Vertreter: thyssenkrupp Intellectual Property GmbH
(86) Internationale Anmeldenummer: PCT/EP2024/052224
(87) Internationale Veröffentlichungsnummer: WO 2024/160812

(56) Entgegenhaltungen:
- DE-A1- 102021 204 176

## Beschreibung

Die Erfindung betrifft einen Ofen sowie ein Verfahren zum Brennen und Kühlen von Material, wie Karbonatgesteinen, mit einem GGR-Schachtofen. Bei dem Ofen handelt es sich beispielsweise um einen Gleichstrom-Gegenstrom-Regenerativ-Schachtofen (GGR-Schachtofen) oder um einen Schachtofen, insbesondere einen Ringschachtofen.

Das Brennen von Karbonatgestein in einem Schachtofen oder einem GGR-Schachtofen ist seit etwa 60 Jahren bekannt. Ein derartiger, beispielsweise aus der WO 2011/072894 A1 bekannter GGR-Schachtofen weist zwei vertikale, parallele Schächte auf, die zyklisch arbeiten, wobei nur in einem Schacht, dem jeweiligen Brennschacht, gebrannt wird, während der andere Schacht als Regenerativschacht arbeitet. Dem Brennschacht werden Oxidationsgas im Gleichstrom mit dem Material und Brennstoff zugeführt, wobei die dabei entstehenden heißen Abgase zusammen mit der von unten zugeführten, erwärmten Kühlluft über den Überstromkanal in den Abgasschacht geleitet werden, wo die Abgase im Gegenstrom zum Material nach oben abgeleitet werden und das Material dabei vorwärmen. Das Material wird üblicherweise von oben zusammen mit dem Oxidationsgas in den Schacht aufgegeben, wobei Brennstoffe in der Brennzone eingedüst werden.

Das zu brennende Material passiert üblicherweise in jedem Schacht eine Vorwärmzone zum Vorwärmen des Materials, eine sich daran anschließende Brennzone, in der das Material gebrannt wird und eine sich daran anschließende Kühlzone, in der Kühlluft dem heißen Material zugeführt wird.

Um den Qualitätsanforderungen bezüglich einer hohen Reaktivität des Branntkalkes, wie sie beispielsweise in Stahlwerken gefordert wird, gerecht zu werden, dürfen die Temperaturen in der Brennzone einen Wert von 1100°C, vorzugsweise 1000°C, nicht überschreiten. Des Weiteren steigt die Nachfrage nach umweltfreundlicher Herstellung von Branntkalk ebenfalls, sodass bestimmte Anforderungen an den CO₂-Gehalt des Abgases zur anschließenden Nachbehandlung erfüllt werden müssen. Zur Erhöhung des CO₂-Gehalts im Abgas ist es bekannt zumindest einen Teil des Abgases in einen der Schächte zurückzuleiten. Eine solche Abgasrückführung erfordert eine aufwendige und kostenintensive Behandlung des Abgases bevor es in den Schacht zurückgeführt werden kann.

Davon ausgehend ist es Aufgabe der vorliegenden Erfindung, einen Ofen, wie einen Schachtofen und/ oder einen kostengünstigen und energieeffizienten GGR-Schachtofen und ein Verfahren zum Brennen von Karbonatgestein mit einem solchen Ofen bereitzustellen, mit welchem Kalk mit einer hohen Reaktivität hergestellt wird, wobei bei gleichzeitig eine CO₂-Abscheidung aus dem Abgas ermöglicht wird.

Diese Aufgabe wird erfindungsgemäß durch eine Vorrichtung mit den Merkmalen des unabhängigen Verfahrensanspruchs 1 und durch ein Verfahren mit den Merkmalen des unabhängigen Vorrichtungsanspruchs 10 gelöst. Vorteilhafte Weiterbildungen ergeben sich aus den abhängigen Ansprüchen.

Nach einem ersten Aspekt umfasst die Erfindung ein Verfahren zum Brennen von Material, wie Karbonatgesteinen, in einem Gleichstrom-Gegenstrom-Regenerativ-Schachtofen mit zwei Schächten, die abwechselnd als Brennschacht und als Regenerativschacht betrieben werden und mittels eines Verbindungskanals miteinander verbunden sind, wobei das Material durch einen Materialeinlass in eine Vorwärmzone zum Vorwärmen des Materials, eine Brennzone zum Brennen des Materials und eine Kühlzone zum Kühlen des Materials zu einem Materialauslass strömt, wobei ein Kühlgas in die Kühlzone eingelassen wird, wobei Abgas über einen innerhalb oder oberhalb der Vorwärmzone angeordneten Abgasauslass aus einem Schacht des Ofens ausgelassen wird und wobei das über den Abgasauslass aus dem Schacht ausgelassene Abgas in einen ersten Teil des Abgases und einen zweiten Teil des Abgases verzweigt wird und wobei der erste Teil des Abgases über einen ersten Abgaseinlass einem oberen Bereich der Vorwärmzone zugeführt wird. Der zweite Teil des aus dem Schacht ausgelassene Abgases wird über einen zweiten Abgaseinlass stromabwärts des ersten Abgaseinlasses der Vorwärmzone zugeführt.

Eine Zufuhr von Abgas an zwei unterschiedlichen Positionen innerhalb der Vorwärmzone sorgt für eine optimale Abgasströmung innerhalb der Vorwärmzone, wobei insbesondere eine zu geringe Temperatur innerhalb der Vorwärmzone zuverlässig verhindert wird und somit eine Kondensation des Abgaseses innerhalb der Vorwärmzone vermieden wird. Dadurch verringert sich zudem das Korrosionsrisiko in den Komponenten der weiteren Abgasbehandlung. Der Schacht weist vorzugsweise eine Mehrzahl von ersten Abgaseinlässen auf, die beispielsweise umfangsmäßig um den Schacht insbesondere auf der gleichen Höhe angeordnet sind und denen der erste Teil des Abgases zugeführt wird. Vorzugsweise sind die ersten Abgaseinlässe jeweils mit einer Leitung, insbesondere einer Ringleitung, zum Leiten des ersten Teils des Abgases verbunden. Beispielswiese sind die ersten Abgaseinlässe gleichmäßig zueinander beabstandet angeordnet. Der Schacht weist vorzugsweise eine Mehrzahl von zweiten Abgaseinlässen auf, die beispielsweise umfangsmäßig um den Schacht insbesondere auf der gleichen Höhe, angeordnet sind und denen der zweite Teil des Abgases zugeführt wird. Vorzugsweise sind die zweiten Abgaseinlässe jeweils mit einer Leitung, insbesondere einer Ringleitung, zum Leiten des zweiten Teils des Abgases verbunden. Beispielswiese sind die zweiten Abgaseinlässe gleichmäßig zueinander beabstandet angeordnet.

Das über den Abgasauslass aus dem Schacht ausgelassene Abgas wird beispielsweise vollständig in einer Kühleinrichtung gekühlt und anschließend in einer Erwärmungseinrichtung auf eine Temperatur von maximal 200°C, insbesondere 50°C bis 160°C, vorzugsweise 70°C bis 120°C erwärmt. Dies bewirkt eine Verringerung der relativen Feuchte des Abgases. Insbesondere wird das Risiko stark vermindert, dass Wasser auskondensiert und zu Betriebsproblemen in den Verdichtern führt. Es ist ebenfalls möglich, dass nur ein Teil des Abgases der Kühleinrichtung und anschließend der Erwärmungseinrichtung zugeführt wird. Das Abgas wird beispielsweise in der Kühleinrichtung auf eine Temperatur von 10°C bis 50°C, insbesondere 15°C bis 40°C gekühlt. Dabei erfolgt eine zumindest teilweise Kondensation des Wassers in dem Abgas, wodurch die absolute Feuchte des Abgases reduziert wird. Die Kühleinrichtung und/ oder die Erwärmungseinrichtung sind optional als Wärmetauscher ausgebildet. Dies ermöglicht eine Nutzung der Abwärme, insbesondere der Temperaturdifferenz eines Fluids an einer anderen Position des Ofenprozesses. Beispielsweise wird das Abgas vor der Kühlung in der Kühleinrichtung in einem Filter entstaubt. Der Filter ist vorzugsweise zwischen dem Abgasauslass und der Kühleinrichtung angeordnet. Bei dem Filter handelt es sich vorzugsweise um einen Staubfilter zum Filtern von Staubpartikeln aus dem Abgas. Der Filter wird beispielsweise im Überdruck oder im Unterdruck mit einem stromabwärts angeordneten Ventilator betrieben. Vorzugsweise ist in Strömungsrichtung des Abgases vor dem Filter ein Verdichter, insbesondere ein Ventilator, angeordnet.

Bei dem zu brennenden Material handelt es sich vorzugsweise um Kalkstein oder Dolomitstein mit einer Korngröße von 10 bis 200mm, vorzugsweise von 15 bis 120mm, höchstvorzugsweise 30 bis 100mm. Bei dem Kühlgas handelt es sich beispielsweise um Luft. Vorzugsweise wird dem Ofen als Brennstoff Methan oder Wasserstoff zugeführt. Am Abgasauslass weist das Abgas vorzugsweise einen Anteil an Wasser von etwa 5 Vol% bis 40 Vol%, insbesondere 10 Vol% bis 25 Vol% auf, wobei die Temperatur beispielsweise etwa 80°C bis 100°C und insbesondere beim Start der Anlage weniger als 80°C beträgt.

Bei dem Ofen handelt es sich beispielsweise um einen Gleichstrom-Gegenstrom-Regenerativ-Schachtofen mit zwei parallelen Schächten oder einen Schachtofen mit genau einem Schacht. Ein Gleichstrom-Gegenstrom-Regenerativ-Schachtofen weist mindestens zwei Schächte auf, die vorzugsweise parallel zueinander und vertikal angeordnet sind. Die Schächte sind abwechselnd als Brennschacht und als Regenerativschacht betreibbar, wobei jeder Schacht in Strömungsrichtung des Materials eine Vorwärmzone zum Vorwärmen des Materials, eine Brennzone zum Brennen des Materials und eine Kühlzone zum Kühlen des Materials aufweist. Jeder Schacht weist vorzugsweise einen Materialeinlass zu Einlassen von zu brennendem Material in den Schacht auf, wobei sich der Materialeinlass insbesondere am oberen Ende des jeweiligen Schachts befindet, sodass das Material schwerkraftbedingt in den jeweiligen Schacht fällt. Der Materialeinlass und/ oder der Materialauslass ist/sind insbesondere als Schleuse zum Einlassen und/ oder Auslassen von Material in den Schachtofen ausgebildet. Ein als Schleuse ausgebildeter Materialeinlass ist vorzugsweise derart ausgestaltet, dass lediglich das zu brennende Rohmaterial in den Schacht gelangt, nicht aber die Umgebungsluft. Auch ein Austreten von Gas über den Materialeinlass aus dem Schacht wird durch die Materialschleuse verhindert. Vorzugsweise ist die Schleuse derart ausgebildet, dass sie den Schacht luftdicht gegen die Umgebung abdichtet und einen Eintritt von Feststoffen, wie das zu brennende Gut, in den Schacht erlaubt.

Der Verbindungskanal ist zur gastechnischen Verbindung der beiden Schächte ausgebildet und verbindet vorzugsweise die Brennzonen der Schächte miteinander. Im Betrieb des GGR-Schachtofens wird jeweils einer der Schächte als Brennschacht betrieben und ist aktiv, wobei der jeweils andere Schacht als Regenerativschacht betrieben wird und passiv ist. Der GGR-Schachtofen wird insbesondere zyklisch betrieben, wobei nach Ablauf der Zykluszeit die Funktion der Schächte getauscht wird. Dieser Vorgang wiederholt sich fortlaufend. In dem als Brennschacht betriebenen, aktiven Schacht wird über die Brennerlanzen ein Brennstoff in die Brennzone eingeleitet. Das zu brennende Material wird in der Vorwärmzone des Brennschachts vorzugsweise auf eine Temperatur von etwa 700°C erwärmt. In dem als Brennschacht betriebenen Schacht ist die Brennzone als Gleichstrombrennzone ausgebildet, wobei das zu brennende Material parallel zu dem Gas strömt. Das Gas strömt innerhalb des Brennschachts von der Vorwärmzone in die Brennzone und anschießend über den Verbindungskanal in die Brennzone und die Vorwärmzone des Regenerativschachts. In dem als Regenerativschacht betriebenen Schacht strömt das Gas in der Vorwärmzone und der Brennzone im Gegenstrom zu dem zu brennenden Material.

Sowohl in dem Brennschacht als auch in dem Regenerativschacht wird Kühlgas im Gegenstrom zu dem zu kühlenden Material durch die Kühlzone geleitet und vorzugsweise vollständig über den Kühlgasauslass der Kühlluftabzugseinrichtung aus dem Schacht ausgelassen, sodass vorzugsweise kein Kühlgas von der Kühlzone in die Brennzone strömt.

Jeder Schacht weist vorzugsweise zumindest einen Abgasauslass, beispielsweise an dem oberen Ende des Schachts innerhalb der Vorwärmzone, auf. Vorzugsweise ist der Abgasauslass oberhalb der Materialsäule in einem materialfreien Bereich der Vorwärmzone angeordnet. Das Abgas wird vorzugsweise ausschließlich aus einem Schacht, insbesondere dem Regenerativschacht, ausgelassen. Das ausgelassene Abgas wird vorzugsweise dem jeweils anderen Schacht, insbesondere dem Brennschacht, oder dem Regenerativschacht zugeführt. Vorzugsweise wird lediglich ein Teil des aus dem Regenerativschacht ausgelassenen Abgases zumindest einem Schacht wieder zugeführt. Ein Teil des aus dem Regenerativschacht ausgelassenen Abgases wird beispielsweise aus dem GGR-Schachtofen abgeführt und beispielweise einer weiteren Behandlung, wie einer Sequestrierung, zugeführt. Das Abgas besteht vorzugsweise aus CO₂ und optional H₂O.

Der Brennzone und/ oder der Vorwärmzone des als Brennschacht betriebenen Schachts wird vorzugsweise ein Brennstoff über eine Brennstoffleitung zugeführt. Vorzugsweise wird der Brennstoff Brennerlanzen zugeführt, die in der Brennzone und/ oder der Vorwärmzone angeordnet sind. Bei dem Brennstoff handelt es sich beispielsweise um ein Brenngas, wie Hochofengas, Methan, Wasserstoff oder Erdgas, oder Kohlenstaub oder Biomasse oder flüssige Brennstoffe. In der Brennzone wird das Material vorzugsweise auf eine Temperatur von etwa 1100°C erhitzt.

Jeder Schacht weist vorzugsweise eine Mehrzahl von Brennerlanzen auf, die sich zumindest teilweise durch die Vorwärmzone erstrecken und insbesondere in die Brennzone des jeweiligen Schachts münden und zum Leiten von beispielsweise Brennstoff und/ oder einem Oxidationsgas, wie Luft oder mit Sauerstoff angereicherte Luft oder reinem Sauerstoff, dienen. Vorzugsweise ist der Brenngasauslass der Brennerlanzen an dem oberen Ende der Brennzone angeordnet, sodass sich die Vorwärmzone bis zu dem Brenngasauslass zumindest einer Brennerlanze erstreckt.

Eine Rückführung des Abgases in zumindest einen Schacht oder beide Schächte ermöglicht die Herstellung von Kalk mit einer hohen Reaktivität, wobei gleichzeitig Prozessgas mit einem CO2-Gehalt von mehr als 90% bezogen auf trockenes Gas hergestellt wird. Bei einem solchen Prozessabgas ist es möglich, dieses mit geringerem Aufwand zu verflüssigen und zu sequestrieren. Beispielsweise wird das verflüssigte Prozessabgas weiteren Verfahrensschritten zugeführt oder gelagert. Alternativ kann mit dem vorangehend beschriebenen GGR-Schachtofen auch Abgas mit weniger CO2-Gehalt, beispielsweise 45% für die Sodaherstellung oder 35% für die Zuckerherstellung oder 30% für die Herstellung von gefälltem Kalziumkarbonat, erzeugt werden.

Insbesondere wird das Abgas in die Vorwärmzone des als Brennschacht und/ oder als Regenerativschacht betriebenen Schachts eingeleitet. Vorzugsweise weist jeder Schacht einen Abgaseinlass, insbesondere einen Verbrennungsgaseinlass auf, der in dem oberen Bereich des Schachts in der Vorwärmzone angeordnet ist und dem Einlass des zur Verbrennung benötigten Gases dient.

Der GGR-Schachtofen weist vorzugsweise stromabwärts des Abgasauslasses eine Abzweigung auf, die derart ausgebildet und eingerichtet ist, dass sie das aus dem Abgasauslass ausgelassene Abgas in einen ersten Teil des Abgases und einen zweiten Teil des Abgases abzweigt. Vorzugsweise ist die Abzweigung in Strömungsrichtung des Abgases hinter einem Staubfilter, der Erwärmungseinrichtung und/ oder der Kühleinrichtung angeordnet. Der erste Teil des Abgases wird über einen ersten Abgaseinlass einem oberen Bereich der Vorwärmzone des Brennschachts und/ oder des Regenerativschachts zugeführt, wobei der zweite Teil des Abgases über einen zweiten Abgaseinlass stromabwärts des ersten Abgaseinlasses der Vorwärmzone des Brennschachts und/ oder des Regenerativschachts zugeführt wird. Vorzugsweise weist die Vorwärmzone des Brennschachts und des Regenerativschachts jeweils einen ersten Abgaseinlass und einen in Strömungsrichtung des Materials hinter diesem angeordneten zweiten Abgaseinlass auf.

Insbesondere ist die Menge an Abgas, die der Vorwärmzone des als Brennschacht betriebenen Schachts und/ oder des als Regenerativschacht betriebenen Schachts über den ersten und/ oder den zweiten Abgaseinlass zugeführt wird, einstellbar. Der GGR-Schachtofen weist vorzugsweise zumindest ein Regelorgan, wie beispielsweis eine Klappe oder ein Ventil, auf. Vorzugsweise ist dem ersten und dem zweiten Abgaseinlass jeweils ein Regelorgan vorgeschaltet, sodass die Menge des ersten Teils des Abgases zu dem ersten Abgaseinlass und/ oder die Menge des zweiten Teils des Abgases zu dem zweiten Abgaseinlass einstellbar ist. Insbesondere wird die Menge an Abgas zu dem ersten und/ oder dem zweiten Abgaseinlass in Abhängigkeit des CO₂-Gehalts des Abgases eingestellt.

Gemäß einer ersten Ausführungsform wird dem ersten und/ oder dem zweiten Teil des Abgases vor dem Einleiten in die Vorwärmzone Sauerstoff zugeführt. Vorzugsweise ist eine mit dem Abgasauslass verbundene Abgasleitung mit einer Oxidationsmittelleitung zur Leitung von Sauerstoff verbunden, sodass Sauerstoff in die Abgasleitung eingeleitet wird. Beispielsweise wird Luft, ein sauerstoffreiches Gas oder reiner Sauerstoff dem ersten und/ oder dem zweiten Teil des Abgases zugeführt. Die Oxidationsmittelleitung ist vorzugsweise mit einer Sauerstoffquelle verbunden. Beispielsweise weist der GGR-Schachtofen zumindest zwei Oxidationsmittelleitungen auf, die jeweils mit einem Abgaseinlass zum Einlassen von Abgas in die Vorwärmzone verbunden sind. Insbesondere wird dem ersten Abgaseinlass und/ oder ausschließlich dem zweiten Abgaseinlass der Vorwärmzone des als Brennschacht betriebenen Schachts Sauerstoff zugeführt.

Gemäß einer weiteren Ausführungsform wird der zweite Teil des Abgases vor dem Einleiten in die Vorwärmzone des Brennschachts auf etwa von 100mbar bis 600mbar, vorzugswiese 200mbar bis 550mbar, insbesondere 500mbar verdichtet. Der GGR-Schachtofen weist vorzugsweis einen Verdichter auf, der zwischen dem Abgasauslass und dem zweiten Abgaseinlass angeordnet und dazu ausgebildet ist den zweiten Teil des Abgases auf etwa von 100mbar bis 600mbar, vorzugswiese 200mbar bis 550mbar, insbesondere 500mbar zu verdichten. Dadurch wird einem Druckverlust innerhalb des GR-Schachtofens entgegengewirkt. Vorzugsweise wird der zweite Teil des Abgases vor dem Einleiten in die Vorwärmzone des Regenerativschachts auf etwa von 50mbar bis 300mbar, vorzugswiese 70mbar bis 200mbar, insbesondere 150mbar verdichtet. Bei einem Einleiten des zweiten Teils des Abgases in den zweiten Abgaseinlass in dem Regenerativschacht ist der Druckverlust innerhalb des GGR-Ofens vorzugsweise geringer als beim Einleiten in den Brennschacht.

Gemäß einer weiteren Ausführungsform wird der zweite Teil des Abgases am unteren Ende der Vorwärmzone, insbesondere direkt, in diese eingeleitet. Insbesondere wird der zweite Teil des Abgases in Strömungsrichtung des Materials vor der Brennzone, insbesondere vor einem Brenngasauslass einer Brennerlanze, in die Vorwärmzone eingeleitet. Der zweite Teil des Abgases wird vorzugsweise über einen oder mehrere als Durchlass in der Schachtwand ausgebildeten zweiten Abgaseinlass oberhalb der Brennzone in die Vorwärmzone eingeleitet.

Gemäß einer weiteren Ausführungsform wird der zweite Teil des Abgases vor dem Einleiten in den zweiten Abgaseinlass auf eine Temperatur von 500°C bis 800°C, insbesondere 550°C bis 700°C, vorzugsweise 600°C erwärmt. Vorzugsweise wird der zweite Teil des Abgases zumindest teilweise oder vollständig in einem Wärmetauscher erwärmt. Dadurch wird eine optimale Vorwärmung des Materials innerhalb der Vorwärmzone erreicht.

Gemäß einer weiteren Ausführungsform wird der zweite Teil des Abgases in einen Bereich der Vorwärmzone eingeleitet, der eine Temperatur aufweist, die der Temperatur des zweiten Teils des Abgases entspricht und/ oder eine Temperatur von 500°C bis 800°C, insbesondere 550°C bis 700°C, vorzugsweise 600°C aufweist. Vorzugswies weist die Vorwärmzone eine Gastemperatur von 70°C bis 800°C auf, wobei am oberen Ende der Vorwärmzone das Gas eine Temperatur von etwa 70°C bis 100°C aufweist und am unteren Ende das Gas eine Temperatur von etwa 700°C bis 900°C, vorzugsweise 800°C aufweist. Die Temperatur des Gases steigt in Strömungsrichtung des Materials vorzugsweise kontinuierlich an. Der zweite Abgaseinlass ist vorzugsweise auf einer Höhe der Vorwärmzone angeordnet, auf der innerhalb der Vorwärmzone eine Gastemperatur von 500°C bis 800°C, insbesondere 550°C bis 700°C, vorzugsweise 600°C eingestellt ist.

Gemäß einer weiteren Ausführungsform weist die Vorwärmzone eine sich in Strömungsrichtung des Materials erstreckende Länge auf, wobei der zweite Abgaseinlass zum Einlassen von Abgas in die Vorwärmzone in Strömungsrichtung des Materials einen Abstand zu dem oberen Ende der Brennzone aufweist und wobei das Verhältnis des Abstandes zu der Länge 0 bis 0,5, insbesondere 0,2 bis 0,3, vorzugsweise 0,25 beträgt. Vorzugsweise erstreckt sich die Vorwärmzone von der Füllhöhe des Materials und/ oder von dem Materialeinlass bis zu der Brennzone, insbesondere bis zu eine Brenngasauslass einer Brennerlanze. Ein solches Verhältnis bietet eine optimale Vermischung der Gasströme innerhalb der Vorwärmzone bei einem optimalen Kapazitätsstromverhältnis.

Gemäß einer weiteren Ausführungsform wird das in der Kühlzone erwärmte Kühlgas über eine Kühlgasabzugseinrichtung aus der Kühlzone des Schachts ausgelassen und einem Wärmetauscher zur Erwärmung des zweiten Teils des Abgases insbesondere im Gegenstrom zugeführt. Das in der Kühlzone erwärmte Kühlgas wird vorzugsweise über die Kühlgasabzugseinrichtung aus der Kühlzone des Schachts ausgelassen. Insbesondere wird das in die Kühlzone eingelassene Kühlgas vollständig über die Kühlgasabzugseinrichtung aus dem jeweiligen Schacht ausgelassen.

Die Kühlgasabzugseinrichtung weist vorzugsweise einen materialfreien Raum innerhalb der Kühlzone des Schachts auf. Der materialfreie Raum der Kühlgasabzugseinrichtung ist beispielsweise als Innenzylinder ausgebildet, der sich insbesondere mittig und in vertikaler Richtung durch die Kühlzone erstreckt. Insbesondere erstreckt sich der Innenzylinder zumindest teilweise in die Brennzone hinein oder endet in einem vertikalen Abstand zu der Brennzone. In dem Innenzylinder ist der Kühlgasauslass zum Auslassen des Kühlgases aus dem Schacht angeordnet. Der Innenzylinder weist vorzugsweise einen Kühlgaseinlass zum Einlassen von Kühlgas der Kühlzonen in das Innere des Innenzylinders auf, wobei der Kühlgaseinlass vorzugsweise oberhalb des Kühlgasauslasses in dem Innenzylinder angeordnet ist. Insbesondere ist der Kühlgaseinlass am oberen Ende der Kühlzone angeordnet, sodass das Kühlgas vorzugsweise durch die gesamte Kühlgaszone und anschließend in den Innenzylinder der Kühlgasabzugseinrichtung strömt. Innerhalb des Innenzylinders strömt das Kühlgas vorzugsweise nach unten in Richtung des Kühlgasauslasses und in die Kühlgasabzugsleitung. Die Kühlgasabzugseinrichtung ist vorzugsweise derart ausgebildet, dass sie das gesamte Kühlgas aus dem Schacht auslässt, sodass vorzugsweise kein Kühlgas in die Brennzone oder den Verbindungskanal zur Verbindung der Brennzonen der Schächte gelangt. Insbesondere ist die Kühlgasabzugseinrichtung mit einem Regelorgan, wie einer Klappe oder einem Ventil, zur Einstellung der Menge an abzuziehendem Kühlgas verbunden.

Die Erfindung umfasst auch einen Gleichstrom-Gegenstrom-Regenerativ-Schachtofen zum Brennen und Kühlen von Material, wie Karbonatgesteinen, mit zwei Schächten, die abwechselnd als Brennschacht und als Regenerativschacht betreibbar und mittels eines Verbindungskanals miteinander verbunden sind, wobei jeder Schacht in Strömungsrichtung des Materials eine Vorwärmzone zum Vorwärmen des Materials, eine Brennzone zum Brennen des Materials und eine Kühlzone zum Kühlen des Materials aufweist, wobei zumindest ein Schacht des GGR-Schachtofens einen innerhalb oder oberhalb der Vorwärmzone angeordneten Abgasauslass zum Auslassen von Abgas aus dem Schacht und einen ersten Abgaseinlass zum Einlassen von Abgas aufweist, und wobei der Abgasauslass mit dem ersten Abgaseinlass zum Einlassen eines ersten Teils des Abgases in die Vorwärmzone verbunden ist. Der Schacht weist innerhalb der Vorwärmzone einen zweiten Abgaseinlass in Strömungsrichtung des Materials hinter dem ersten Abgaseinlass auf, der mit dem Abgasauslass zum Einlassen eines zweiten Teils des Abgases in die Vorwärmzone verbunden ist.

Die mit Bezug auf das Verfahren zum Brennen von Material, wie Karbonatgesteinen, in einem GGR-Schachtofen beschriebenen Ausführungsformen und Vorteile treffen in vorrichtungsgemäßer Entsprechung ebenfalls auf den GGR-Schachtofen zu.

Gemäß einer Ausführungsform weist der Schachtofen ein Regelorgan auf, das dem ersten und/ oder dem zweiten Abgaseinlass vorgeschaltet ist zur Regelung der Menge an Abgas, die der Vorwärmzone des als Brennschacht betriebenen Schachts und/ oder des als Regenerativschacht betriebenen Schachts über den ersten und/ oder den zweiten Abgaseinlass zugeführt wird.

Gemäß einer weiteren Ausführungsform, weist der Schachtofen zumindest eine Oxidationsmittelleitung, die mit dem ersten und/ oder dem zweiten Abgaseinlass zur Einleitung eines Oxidationsmittels in das Abgas verbunden ist. Bei dem Oxidationsmittel handelt es sich beispielsweise um Luft, ein sauerstoffreiches Gas oder reinen Sauerstoff.

Gemäß einer weiteren Ausführungsform ist dem zweiten Abgaseinlass ein Verdichter vorgeschaltet, der derart ausgebildet und eingerichtet ist, dass er das Abgas vor dem Einleiten in den zweiten Abgaseinlass des Brennschachts auf einen Druck von 100mbar bis 600mbar, vorzugswiese 200mbar bis 550mbar, insbesondere 500mbar verdichtet. Insbesondere ist dem zweiten Abgaseinlass ein Verdichter vorgeschaltet, der derart ausgebildet und eingerichtet ist, dass er das Abgas vor dem Einleiten in den zweiten Abgaseinlass des Regenerativschachts auf einen Druck von 50mbar bis 300mbar, vorzugswiese 70mbar bis 200mbar, insbesondere 150mbar verdichtet.

Gemäß einer weiteren Ausführungsform ist der zweite Abgaseinlass an dem unteren Ende der Vorwärmzone angeordnet.

Gemäß einer weiteren Ausführungsform ist zwischen dem Abgasauslass und dem zweiten Abgaseinlass ein Wärmetauscher angeordnet, der derart ausgebildet und eingerichtet ist, dass er den zweiten Teil des Abgases auf eine Temperatur von 500°C bis 800°C, insbesondere 550°C bis 700°C, vorzugsweise 600°C erwärmt.

Gemäß einer weiteren Ausführungsform weist die Vorwärmzone eine sich in Strömungsrichtung des Materials erstreckende Länge A auf, wobei der zweite Abgaseinlass zum Einlassen von Abgas in die Vorwärmzone in Strömungsrichtung des Materials einen Abstand B zu dem oberen Ende der Brennzone 20 aufweist und wobei das Verhältnis B/A des Abstandes B zu der Länge A, 0 bis 0,5, insbesondere 0,2 bis 0,3, vorzugsweise 0,25 beträgt.

Gemäß einer weiteren Ausführungsform ist die Kühlzone einen Kühlgaseinlass zum Einlassen von Kühlgas in die Kühlzone und eine Kühlgasabzugseinrichtung zum Abführen von Kühlgas aus dem Schacht aufweist und wobei die Kühlgasabzugseinrichtung mit dem Wärmetauscher zur Erwärmung des zweiten Teils des Abgases, insbesondere im Gegenstrom, verbunden ist.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung eines GGR-Schachtofens in einer Schnittansicht gemäß einem Ausführungsbeispiel.
- Fig. 2: zeigt eine schematische Darstellung eines Ausschnitts eines GGR-Schachtofens gemäß dem Ausführungsbeispiel der Fig. 1 in einer Schnittansicht.

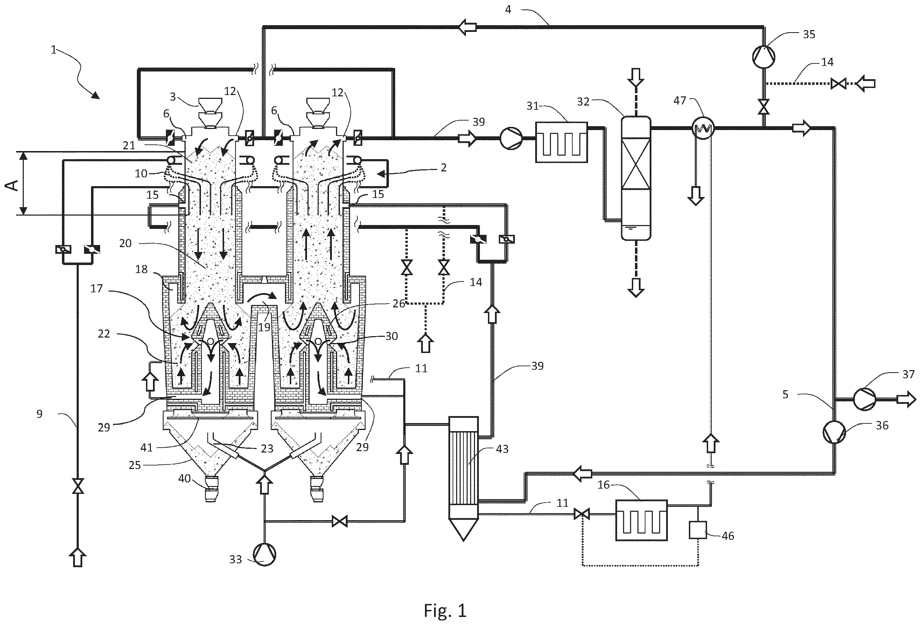

Fig. 1 zeigt einen Ofen, insbesondere einen GGR-Schachtofen 1, mit zwei parallelen und vertikal ausgerichteten Schächten 2. Die Schächte 2 des GGR-Schachtofens 1 sind im Wesentlichen identisch aufgebaut, sodass in Fig. 1 leidglich einer der beiden Schächte 2 mit Bezugszeichen versehen ist und im Folgenden der Einfachheit halber lediglich einer der beiden Schächte 2 beschrieben ist. Jeder Schacht 2 weist jeweils einen Materialeinlass 3 auf zum Einlassen von zu brennenden Material in den jeweiligen Schacht 2 des GGR-Schachtofens 1. Bei dem zu brennenden Material handelt es sich insbesondere um Kalkstein und/ oder Dolomitstein vorzugsweise mit einer Korngröße von 10 bis 200mm, vorzugsweise von 15 bis 120mm, höchstvorzugsweise 30 bis 100mm. Die Materialeinlässe 3 sind beispielhaft an dem oberen Ende des jeweiligen Schachts 2 angeordnet, sodass das Material durch den Materialeinlass 3 schwerkraftbedingt in den Schacht 2 fällt. Der Materialeinlass 3 ist beispielsweise als obere Öffnung des Schachts 2 und insbesondere als Schleuse 3 ausgebildet und erstreckt sich vorzugsweise über den gesamten oder einen Teil des Querschnitts des Schachts 2. Ein als Schleuse 3 ausgebildeter Materialeinlass ist vorzugsweise derart ausgestaltet, dass lediglich das zu brennende Rohmaterial in den Schacht 2 gelangt, nicht aber die Umgebungsluft. Vorzugsweise ist die Schleuse 3 derart ausgebildet, dass sie den Schacht 2 luftdicht gegen die Umgebung abdichtet und einen Eintritt von Feststoffen, wie das zu brennende Gut, in den Schacht erlaubt.

Jeder Schacht 2 weist an seinem oberen Ende des Weiteren einen Verbrennungsgaseinlass 12 zum Einlassen von Verbrennungsgas zur Verbrennung von Brennstoffen auf. Bei dem Verbrennungsgaseinlass 12 handelt es sich um einen ersten Abgaseinlass 12, wobei jeder Schacht 2 vorzugsweise einen zweiten Abgaseinlass 15 aufweist, der in Strömungsrichtung des Materials hinter dem ersten Abgaseinlass 12 angeordnet ist. Beispielsweise weist der Schacht 2 eine Mehrzahl von sich umfangmäßig insbesondere auf gleicher Höhe und/ oder gleichmäßig zueinander beabstandete erste und zweite Abgaseinlässe auf. Bei dem Verbrennungsgas handelt es sich beispielsweise um entstaubtes Abgas zumindest eines der Schächte 2, wobei das Abgas vorzugsweise mit Sauerstoff angereichert ist. Des Weiteren weist jeder Schacht 2 einen Abgasauslass 6 zum Auslassen von Abgasen aus dem jeweiligen Schacht 2 auf. Jedem Abgasauslass 6 und Abgaseinlass 12, 15 ist beispielhaft jeweils ein Regelorgan zugeordnet. Über die Regelorgane, wie beispielsweise einem mengenregulierbarem Verdichter 35, ist vorzugsweise die Menge an Verbrennungsgas, insbesondere Abgas, in den jeweiligen Abgaseinlass 12, 15 und die Menge an über den jeweiligen Abgasauslass 6 abzuziehendes Abgas einstellbar. Der erste Abgaseinlass 12 und der Abgasauslass 6 sind beispielhaft auf dem gleichen Höhenniveau und insbesondere innerhalb der Vorwärmzone 21 des jeweiligen Schachts 2 angeordnet. Beispielhaft ist der erste Abgaseinlass 12 und der Abgasauslass 6 in einem oberen Endbereich, insbesondere dem materialfreien oberen Ende der Vorwärmzone 21 des jeweiligen Schachts 2 angeordnet.

Am unteren Ende des Schachts 2 ist ein Materialauslass 40 zum Abführen des gebrannten Materials angeordnet. Bei dem Materialauslass 40 handelt es sich beispielsweise um eine wie mit Bezug auf den Materialeinlass 3 beschriebene Schleuse. Das gebrannte Material wird beispielsweise in einen Auslasstrichter 25 geleitet, an den sich der Materialauslass 40 des Schachts 2 anschließt. Der Auslasstrichter 25 ist beispielhaft trichterförmig ausgebildet. Der Auslasstrichter 25 weist vorzugsweise einen Kühlgaseinlass 23 zum Einlassen von Kühlgas in den jeweilige Schacht 2 auf. Das Kühlgas wird vorzugsweise mittels eines Verdichters 33 in den Kühlgaseinlass geleitet.

Im Betrieb des GGR-Schachtofens 1 strömt das zu brennende Material von oben nach unten durch den jeweiligen Schacht 2, wobei die Kühlluft von unten nach oben, im Gegenstrom zu dem Material, durch den jeweiligen Schacht 2 strömt. Das Ofenabgas wird durch den Abgasauslass 6 aus dem Schacht 2 abgeführt.

Unterhalb des Materialeinlasses 3 und des ersten Abgaseinlasses 12 schließt sich in Strömungsrichtung des Materials die Vorwärmzone 21 des jeweilige Schachtes 2 an. In der Vorwärmzone 21 wird das Material und das Verbrennungsgas vorzugsweise auf etwa 700°C vorgewärmt. Vorzugsweise ist der jeweilige Schacht 2 mit zu brennendem Material gefüllt. Das Material wird vorzugsweise oberhalb der Vorwärmzone 21 in den jeweiligen Schacht 2 aufgegeben. Zumindest ein Teil der Vorwärmzone 21 und der sich in Strömungsrichtung des Materials daran anschließende Teil des jeweiligen Schachtes 2 sind beispielsweise mit einer feuerfesten Auskleidung umgeben.

In der Vorwärmzone 21 sind optional eine Mehrzahl von Brennerlanzen 10 angeordnet, die Jeweils in die Brennzone 20 münden und jeweils als Einlass für Brennstoff, wie beispielsweise ein Brenngas, Öl oder gemahlener fester Brennstoff dienen. Der GGR-Schachtofen 1 weist beispielsweise eine Kühleinrichtung zur Kühlung der Brennerlanzen 10 auf. Die Kühleinrichtung umfasst beispielsweise eine Mehrzahl von Kühlluftringleitungen, die sich ringförmig um den Schachtbereich erstrecken, in dem die Brennerlanzen 10 angeordnet sind. Durch die Kühlluftringleitungen strömt vorzugsweise Kühlluft zur Kühlung der Brennerlanzen 10. Vorzugsweise werden die Brennerlanzen 10 mittels des über den Abgasauslass 6 abgeführten Abgases gekühlt. Vorzugsweise ist der Abgasauslass 6 mit den Brennerlanzen 10 zur Leitung von Abgas zu den Brennerlanzen 10 verbunden.

Die Brennerlanzen 10 sind vorzugsweise mit einer Brennstoffleitung 9 zur Leitung von Brennstoff zu den Brennerlanzen 10 verbunden. Die Brennstoffleitung 9 ist beispielshaft zumindest teilweise als Ringleitung ausgebildet, die sich umfangsmäßig um den jeweiligen Schacht 2 herum erstreckt. Vorzugsweise weist jeder Schacht 2 eine jeweils den Brennerlanzen 10 des Schachts 2 zugeordnete Brennstoffleitung auf, die insbesondere jeweils ein Regelorgan zur Einstellung der Brennstoffmenge zu den Brennerlanzen 10 aufweist.

An die Vorwärmzone 21 schließt sich in Strömungsrichtung des Materials die Brennzone 20 an. In der Brennzone 20 wird der Brennstoff verbrannt und das vorgewärmte Material bei einer Temperatur von etwa 1000°C gebrannt. Vorzugsweise weisen die Brennerlanzen an ihren Enden jeweils Brennstoffauslässe auf, wobei sich die Brennzone 20 insbesondere von den Brennstoffauslässen der Brennerlanzen 10 in Strömungsrichtung des Materials erstreckt. Der GGR-Schachtofen 1 weist des Weiteren einen Verbindungskanal 19 zum gastechnischen Verbinden der beiden Schächte 2 miteinander auf. In dem Verbindungskanal 19 ist insbesondere kein zu brennendes Material vorhanden.

Die Fig. 1 zeigt beispielhaft einen GGR-Kalkofen 1 mit runden Schachtquerschnitten. Der Schachtquerschnitt kann jedoch eine andere geometrische Kontur aufweisen, wie beispielsweise rund, halbrund, oval, viereckig oder vieleckig.

An die Brennzone 20 schließt sich in Strömungsrichtung des Materials in jedem Schacht 2 eine Kühlzone 22 an, die sich bis zur Austragseinrichtung 41 erstreckt. Das Material wird innerhalb der Kühlzone 22 auf etwa 100°C im Gegenstrom zu dem Material strömendem Kühlgas abgekühlt.

Jede Kühlzone 22 weist jeweils eine Kühlluftabzugseinrichtung 17 mit jeweils einem Kühlgasauslass 29 auf. Das über den Kühlgaseinlass 23 in die Kühlzone 22 strömende Kühlgas strömt vorzugsweise vollständig aus dem Kühlgasauslass 29 der Kühlluftabzugseinrichtung 17 aus dem jeweiligen Schacht 2 heraus.

Jede Kühlzone 22 weist jeweils eine Kühlgasabzugseinrichtung 17 auf, die einen Innenzylinder 26 umfasst, der sich von der Kühlzone 22 zumindest teilweise in die Brennzone 20 oder bis auf eine Höhe erstreckt, die zu der Brennzone beabstandet ist und einen Kühlgasauslass 29 aufweist, der mit der Kühlgasabzugsleitung 11 verbunden ist.

Die Kühlzone 22 ist beispielhaft in einem Schachtabschnitt ausgebildet, der einen in etwa konstanten Querschnitt aufweist, wobei der Schachtquerschnitt der Kühlzone 22 in etwa dem Schachtquerschnitt dem unteren Bereich der Brennzone 20 entspricht. Beispielsweise ist auf der Höhe des Verbindungskanals 19 ein materialfreier Ringraum ausgebildet. Jeder Schacht 2 des GGR-Schachtofens 1 weist vorzugsweise einen Innenzylinder 26 auf, der sich mittig in vertikaler Richtung durch die Kühlzone 22 erstreckt. Beispielhaft erstreckt sich der Innenzylinder 26 von der Austragseinrichtung 41 durch die Kühlzone 22 in die Brennzone 20 bis auf die Höhe des Verbindungskanals 19. Zur Kühlung des Innenzylinders 29 sind in dessen Außenwände eine Mehrzahl von Kühlluftkanälen ausgebildet, die mit einer nicht dargestellten Kühlluftleitung zur Leitung von Kühlluft verbunden sind. Die erwärmte Kühlluft wird beispielhaft in die Kühlgasabzugsleitung 11 geleitet und vorzugsweise zur Erwärmung des Abgases in den Wärmetauscher 43 geführt. Beispielsweise wird die erwärmte Kühlluft als Energiequelle für anderer Prozesse wie zum Beispiel zur Trocknung von Biomasse oder Kalkstein verwendet.

Der Innenzylinder 26 der Kühlgasabzugseinrichtung 17 weist einen Kühlgasauslass 29 auf, der sich von dem Innenzylinder 26 radial nach außen durch die Schachtwand erstreckt und der Leitung von Kühlgas aus dem Innenzylinder 26 in die Kühlgasabzugsleitung 11 dient. Der Innenzylinder 26 weist des Weiteren einen Kühlgaseinlass 30 zum Einlassen von Kühlgas aus der Kühlzone 22 in den Innenzylinder 26 auf. Der Kühlgaseinlass 30 erstreckt sich durch die Innenzylinderwand in die Kühlzone 22 und verbindet das Innere des Innenzylinders 26 mit der Kühlzone 22. Der Kühlgaseinlass 30 ist vorzugsweise oberhalb des Kühlgasauslasses 29 in der Kühlzone 22 angeordnet. Das Kühlgas strömt im Betrieb des GGR-Schachtofens 1 von unten nach oben durch die Kühlzone 22 und in den Kühlgaseinlass 30 in den Innenzylinder 26 der Kühlgasabzugseinrichtung 17. Vorzugsweise strömt das gesamte in die Kühlzone 22 eingeleitete Kühlgas durch die Kühlgaseinlässe 30 in die Kühlgasabzugseinrichtung 17, sodass kein Kühlgas in die Brennzone 20 gelangt. Der Kühlluftauslass 29 des Innenzylinders 26 ist vorzugsweise im unteren Bereich der Kühlzone 22 angeordnet. Das Kühlgas strömt insbesondere von dem Kühlgaseinlass 30 in dem Innenzylinder 26 nach unten zu dem Kühlgasauslass 29.

An dem materialauslassseitigen Ende eines jeden Schachtes 2 ist vorzugsweise eine Austragseinrichtung 41 angeordnet. Die Austragseinrichtungen 41 umfassen beispielsweise horizontale Platten, vorzugsweise einen Austragstisch, die einen seitlichen Durchtritt des Materials zwischen dem Austragstisch und der Gehäusewand des GGR-Schachtofens erlauben. Die Austragseinrichtung 41 ist vorzugsweise als Schub- oder Drehtisch oder als Tisch mit Schubräumer ausgeführt. Dies ermöglicht eine gleichmäßige Durchsatzgeschwindigkeit des Brennguts durch die Schächte 2. Die Austragseinrichtung 41 umfasst des Weiteren beispielhaft den Auslasstrichter 25, der sich an den Austragstisch anschließt und an dessen unterem Ende der Materialauslass 40 angebracht ist.

Im Betrieb des GGR-Schachtofens 1 ist jeweils einer der Schächte 2 aktiv, wobei der jeweils andere Schacht 2 passiv ist. Der aktive Schacht 2 wird als Brennschacht und der passive Schacht 2 als Regenerativschacht bezeichnet. Der GGR-Schachtofen 1 wird insbesondere zyklisch betrieben, wobei eine übliche Zykluszahl beispielsweise 75 bis 150 Zyklen pro Tag beträgt. Nach Ablauf der Zykluszeit wird die Funktion der Schächte 2 getauscht. Dieser Vorgang wiederholt sich fortlaufend. Über die Materialeinlässe 3 wird abwechselnd Material wie Kalk- oder Dolomitstein in die Schächte 2 aufgegeben. In dem als Brennschacht betriebenen, aktiven Schacht 2 wird über die Brennerlanzen 10 ein Brennstoff in den Brennschacht 2 eingeleitet. Das zu brennende Material wird in der Vorwärmzone 21 des Brennschachts auf eine Temperatur von etwa 700°C erwärmt. In dem Ausführungsbeispiel der Fig. 1 wird der linke Schacht 2 als Brennschacht betrieben, wobei der rechte Schacht 2 als Regenerativschacht betrieben wird.

Im Betrieb des GGR-Schachtofens 1 strömt sowohl in dem Brennschacht 2 als auch in dem Regenerativschacht 2 das Kühlgas im Gegenstrom zu dem zu kühlenden Material durch die Kühlzone 22 und wird vorzugsweise vollständig über den Kühlgasauslass 29 aus dem Schacht 2 ausgelassen, sodass vorzugsweise kein Kühlgas von der Kühlzone 22 in die Brennzone 20 strömt.

Innerhalb des als Brennschacht betriebenen Schachts 2 strömt das Verbrennungsgas durch den ersten Abgaseinlass 12 in den Brennschacht und im Gleichstrom mit dem Material innerhalb der Brennzone 20 in den als Ringkanal 18 ausgebildeten materialfreien Raum. Von dem materialfreien Raum 18 strömt das Gas über den Verbindungskanal 19 in den als Regenerativschacht betriebenen Schacht 2. Innerhalb des Regenerativschachts strömt das Gas von dem Verbindungskanal 19 und dem materialfreien Raum 18 des Regenerativschachts im Gegenstrom zu dem zu brennenden Material durch die Brennzone 20 in die Vorwärmzone 21 und verlässt den Regenerativschacht durch den Abgasauslass 6 des Regenerativschachts. Vorzugsweise weist das aus dem Schacht 2 ausgelassene Abgas eine Temperatur von 60°C bis 160°C, vorzugsweise 100°C auf.

Das Abgas wird in eine sich an den Abgasauslass 6 anschließende Abgasleitung 39 geleitet. Die Abgasleitung 39 weist in Strömungsrichtung des Abgases im Anschluss an den Abgasauslass 6 optional einen Abgasfilter 31 zum Filtern von feinen Partikeln, insbesondere Staub, aus dem Abgas auf. Stromabwärts des Abgasfilters 31 weist die Abgasleitung 39 eine Abzweigung auf, wobei ein erster Teil des Abgases in einer Verbrennungsgasleitung 4 zu dem ersten Abgaseinlass 12 geleitet wird. Stromabwärts der Abzweigung weist die Verbrennungsgasleitung 4 in Strömungsrichtung des ersten Teils des Abgases beispielhaft ein Regelorgan, wie beispielsweise eine Drosselklappe, und einen Verdichter 35 auf. Die Verbrennungsgasleitung 4 ist vorzugsweise mit den ersten Abgaseinlass 12 der Schachte 2 verbunden, wobei über ein dem ersten Abgaseinlass 12 vorgeschaltetes Regelorgan vorzugsweise lediglich dem erste Abgaseinlass 12 des als Brennschacht betriebenen Schachts 2 das Abgas zugeführt wird. Es ist ebenfalls denkbar, dass ausschließlich dem Regenerativschacht oder beiden Schächten 2 das Abgas der Verbrennungsgasleitung 4 zugeführt wird. Die Verbrennungsgasleitung 4 ist vorzugsweise mit einer Oxidationsmittelleitung 14 verbunden, sodass ein Oxidationsmittel, vorzugsweise reiner Sauerstoff, in die Verbrennungsgasleitung 4 und anschließend zusammen mit dem Abgas über den ersten Abgaseinlass 12 in den Schacht 2 eingeführt wird. Es ist ebenfalls denkbar, dass als Oxidationsmittel ein sauerstoffreiches Gas mit einem Sauerstoffanteil von mindestens 70 bis 95%, vorzugsweise 90% in die Verbrennungsgasleitung 4 eingeführt wird.

Der Teil des Abgases, der nicht zu dem ersten Abgaseinlass 12 zurückgeführt wird, wird als zweiter Teil des Abgases bezeichnet und wird in der Abgasleitung 39 einem zweiten Abgaseinlass 15 in der Vorwärmzone 21 zugeführt. Die Abgasleitung 39 weist stromabwärts der Abzweigung der Verbrennungsgasleitung 4 in Strömungsrichtung des zweiten Teils des Abgases vorzugsweise einen mengenregulierbaren Verdichter 36 und einen Wärmetauscher 43 auf. Der Wärmetauscher 43 ist beispielhaft als Rekuperator ausgebildet, wobei der zweite Teil des Abgases im Gegenstrom zu dem abgezogenen Kühlgas erwärmt wird und sich das Kühlgas gleichzeitig abkühlt. Der Wärmetauscher 43 ist insbesondere über eine Kühlgasabzugsleitung 11 mit den Kühlgasauslässen 29 beider Schachte 2 verbunden, sodass der zweite Teil des Abgases in dem Wärmetauscher 43 mittels des abgezogenen Kühlgases vorzugsweise im Gegenstrom erwärmt wird. Im Anschluss an den Wärmetauscher 43 weist die Kühlgasabzugsleitung 11 optional ein Regelorgan zum Einstellen der abzuziehenden Kühlgasmenge und einen Filter 16 zum Entstauben des Kühlgases auf. Der zweite Teil des Abgases wird in dem Wärmetauscher 43 vorzugsweise auf eine Temperatur von etwa 500°C bis 800°C, insbesondere 550°C bis 700°C, vorzugsweise 600°C erhitzt.

Stromabwärts des Wärmtauschers 43 und vor dem zweiten Abgaseinlass 15 ist die Abgasleitung 39 vorzugsweise mit einer Oxidationsmittelleitung 14 zum Einleiten von einem Oxidationsmittel, wie beispielsweise reinem Sauerstoff, Luft oder einem sauerstoffreichen Gas, in die Abgasleitung 39 verbunden.

Stromabwärts des Abgasfilters 31 ist insbesondere eine Kühleinrichtung 32 angeordnet. Die Kühleinrichtung 32 ist beispielsweise ein Wärmetauscher, der vorzugsweise mit einem Kühlmittel, wie Wasser, im Gegenstrom bestrieben wird. Stromabwärts der Kühleinrichtung 32 ist vorzugsweise eine Erwärmungseinrichtung 47 zur Erwärmung des abgekühlten Abgases angeordnet. Die Erwärmungseinrichtung 47 ist vorzugsweise derart ausgebildet, dass sie das Abgas auf eine Temperatur von maximal 200°C, insbesondere 50°C bis 160°C, vorzugsweise 70°C bis 120°C erwärmt. Die Erwärmungseinrichtung 47 ist vorzugsweise als Wärmetauscher ausgebildet, wobei dieser mit der Kühlgasabzugsleitung 11 verbunden ist, sodass das aus dem Schacht 2 abgezogene Kühlgas der Erwärmungseinrichtung 47 zugeführt wird. Vorzugsweise wird das in dem Filter 16 gefilterte Kühlgas dem Wärmetauscher 47 zugeführt.

Stromabwärts der Erwärmungseinrichtung 47 ist eine Abzweigung angeordnet, über welche zumindest ein Teil des Abgases abgeführt und ein zweiter Teil über die Abgasleitung 39 in einen der Schächte 2 zurückgeführt wird. Insbesondere wird ein Teilstrom des zweiten Teils des Abgases stromabwärts der Abzweigung der Verbrennungsgasleitung 4 abgeführt. Die Abgasleitung weist beispielhaft vor und nach der Abzweigung des abzuführenden Abgases jeweils einen Verdichter 36, 37 auf.

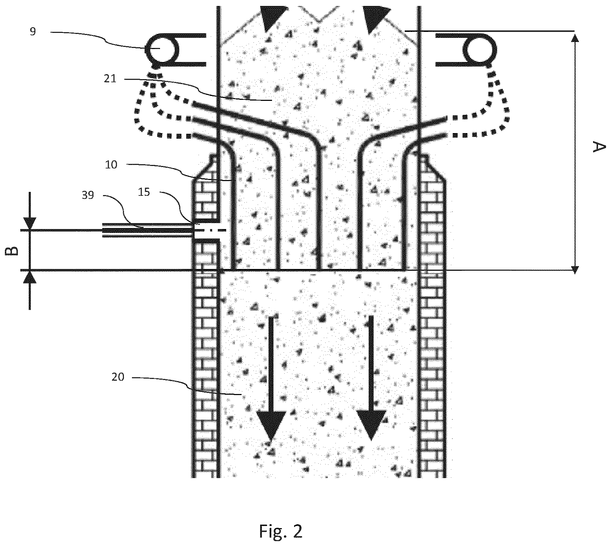

Die Vorwärmzone 21 weist einen zweiten Abgaseinlass 15 zum Einlassen von rezirkuliertem Abgas, insbesondere dem zweiten Teil des Abgases, in die Vorwärmzone 21 auf. Der Gaseinlass 15 ist über die Abgasleitung 39 mit dem Abgasauslass 6 des Schachts 2 verbunden, sodass aus dem Schacht 2 abgeführtes, entstaubtes und erwärmtes Abgas in die Vorwärmzone 21 geleitet wird. Der zweiten Abgaseinlass 15 ist beispielhaft in einem unteren Endbereich der Vorwärmzone 21 angeordnet, wobei die Position des Gaseinlasses 15 in der Fig. 2 detailliert gezeigt ist. Vorzugsweise ist der zweite Abgaseinlass 15 in Strömungsrichtung des Materials hinter dem ersten Abgaseinlass 12 angeordnet.

Die Oxidationsmittelleitung 14 weist vorzugsweise ein Regelorgan auf, wie beispielsweise ein Ventil oder eine Klappe auf, über welches die Menge an Oxidationsmittel in die Verbrennungsgasleitung 4 einstellbar ist. Das Regelorgan ist vorzugsweise mit der Regeleinrichtung verbunden, wobei einer Regeleinrichtung insbesondere derart ausgebildet ist, dass sie die Menge an Oxidationsmittel in die Verbrennungsgasleitung 4 in Abhängigkeit des Sauerstoff- und/ oder den CO₂-Gehalts des Abgases regelt.

Die Kühlgasabzugsleitung 11 weist vorzugsweise ein Regelorgan auf, wie beispielsweise ein Ventil oder eine Klappe auf, über welches die Menge an über die Kühlgasabzugseinrichtung 17 abzuführendem Kühlgas einstellbar ist. Das Regelorgan ist vorzugsweise mit der Regeleinrichtung verbunden, wobei die Regeleinrichtung insbesondere derart ausgebildet ist, dass sie die Menge an über die Kühlgasabzugseinrichtung 17 abgeführtem Kühlgas in Abhängigkeit des Sauerstoff- und/ oder den CO₂-Gehalts des Kühlgases regelt.

Die Regelung dient insbesondere einem möglichst vollständigen Abzug des Kühlgases aus dem GGR-Schachtofen 1 bei einem gleichzeitig möglichst geringen oder vorzugsweise keinem CO₂ in der Kühlgasabzugsleitung 11.

Der mit dem vorangehend beschriebenen GGR-Schachtofen 1 hergestellte Kalk weist eine hohe Reaktivität auf, wobei gleichzeitig Prozessgas mit einem CO2-Gehalt von mehr als 90% bezogen auf trockenes Gas hergestellt wird. Bei einem solchen Prozessabgas ist es mit geringerem Aufwand möglich, dieses zu verflüssigen und zu sequestrieren. Beispielsweise wird das verflüssigte Prozessabgas weiteren Verfahrensschritten zugeführt oder gelagert. Alternativ kann mit dem vorangehend beschriebenen GGR-Schachtofen auch Abgas mit weniger CO2-Gehalt, beispielsweise 45% für die Sodaherstellung oder 35% für die Zuckerherstellung oder 30% für die Herstellung von gefälltem Kalziumkarbonat, erzeugt werden.

Fig. 2 zeigt eine Detailansicht eines Abschnitts des GGR-Ofens 1, in dem der zweite Abgaseinlass 15 zum Einlassen von Abgas in die Vorwärmzone 21 dargestellt ist. Der zweite Abgaseinlass 15 weist einen vertikalen Abstand B zu dem oberen Ende Brennzone 20 auf, wobei das obere Ende der Brennzone 20 auf der Höhe des Brenngasauslasses der Brennerlanzen 10 angeordnet ist. Beispielhaft weist der Schacht 2 fünf Brennerlanzen 10 auf, die alle auf dem gleichen Höhenniveau enden. Es ist ebenfalls denkbar, dass die Brennerlanzen 10 auf unterschiedlichem Höhenniveau enden, wobei das obere Ende der Brennzone 20 an dem obersten Brenngasauslass einer Brennerlanze 10 beginnt. Die Vorwärmzone 21 weist eine Länge A auf, die sich von dem oberen Ende der Vorwärmzone 21 bis zu dem oberen Ende der Brennzone 20 erstreckt. Das obere Ende der Vorwärmzone 21 ist beispielhaft an dem Materialeinlass 3 oder der Materialbetthöhe angeordnet. Vorzugsweise beträgt das Verhältnis B/A des Abstands B zu der Länge A 0 bis 0,5, insbesondere 0,2 bis 3, vorzugsweise 0,25. Ein an diesem Längenverhältnis positionierter zweiten Abgaseinlasses bietet eine optimale Einleitungsposition für das Abgas.

Vorzugsweise beträgt die Temperatur des Gases innerhalb der Vorwärmzone 21 etwa 80°C bis 800°C, wobei das Gas an dem Abgasauslass 6 der Vorwärmzone 21 eine Temperatur von etwa 80°C bis 100°C und an dem Ende der Vorwärmzone 21, insbesondere dem Übergang zwischen der Vorwärmzone 21 und der Brennzone 20 etwa 800°C bis 900°C aufweist. Die Temperatur innerhalb der Vorwärmzone 21 steigt in Strömungsrichtung des Materials vorzugsweise kontinuierlich an. Insbesondere ist der zweite Abgaseinlass 15 auf einer Höhe innerhalb der Vorwärmzone 21 angeordnet, in der innerhalb der Vorwärmzone eine Temperatur von etwa 500°C bis 700°C, vorzugsweise 550°C bis 650°C, insbesondere 600°C eingestellt ist.

Die Abgasleitung 39 weist vorzugsweise einen Verdichter auf, der dazu ausgebildet ist, das Abgas vor dem Einlass in die Vorwärmzone 21 auf etwa 100mbar bis 500mbar zu verdichten.

### Bezugszeichenliste

- 1: Ofen
- 2: Schacht
- 3: Materialeinlass / Schleuse
- 4: Verbrennungsgasleitung
- 6: Abgasauslass
- 8: Heizeinrichtung
- 9: Brennstoffleitung
- 10: Brennerlanzen
- 11: Kühlgasabzugsleitung
- 12: Verbrennungsgaseinlass/ erster Abgaseinlass
- 13: Brennkammerebenen
- 14: Oxidationsmittelleitung
- 15: Gaseinlass / zweiter Abgaseinlass
- 16: Filter
- 17: Kühlgasabzugseinrichtung
- 18: Ringkanal / materialfreier Raum
- 19: Verbindungskanal
- 20: Brennzone
- 21: Vorwärmzone
- 22: Kühlzone
- 23: Kühlgaseinlass
- 25: Auslasstrichter
- 26: Innenzylinder
- 29: Kühlgasauslass
- 30: Kühlgaseinlass
- 31: Abgasfilter
- 32: Kühleinrichtung
- 33 - 37: Verdichter
- 39: Abgasleitung
- 40: Materialauslass / Schleuse
- 41: Austragseinrichtung
- 43: Wärmetauscher / Rekuperator
- 47: Erwärmungseinrichtung
- 48: Kühlluftleitung

## Patentansprüche

1. Verfahren zum Brennen von Material, wie Karbonatgesteinen, in einem Gleichstrom-Gegenstrom-Regenerativ-Schachtofen (1) mit zwei Schächten (2), die abwechselnd als Brennschacht und als Regenerativschacht betrieben werden und mittels eines Verbindungskanals (19) miteinander verbunden sind, wobei das Material durch einen Materialeinlass (3) in eine Vorwärmzone (21) zum Vorwärmen des Materials, eine Brennzone (20) zum Brennen des Materials und eine Kühlzone (22) zum Kühlen des Materials zu einem Materialauslass (40) strömt,
wobei ein Kühlgas in die Kühlzone (22) eingelassen wird
wobei Abgas über einen innerhalb oder oberhalb der Vorwärmzone (21) angeordneten Abgasauslass (6) aus einem Schacht (2) des Ofens ausgelassen wird und
wobei das über den Abgasauslass (6) aus dem Schacht (2) ausgelassene Abgas in einen ersten Teil des Abgases und einen zweiten Teil des Abgases verzweigt wird und
wobei der erste Teil des Abgases über einen ersten Abgaseinlass (12) einem oberen Bereich der Vorwärmzone (21) zugeführt wird,
**dadurch gekennzeichnet, dass**
der zweite Teil des aus dem Schacht (2) ausgelassene Abgases über einen zweiten Abgaseinlass (15) stromabwärts des ersten Abgaseinlasses (12) der Vorwärmzone (21) zugeführt wird.

2. Verfahren nach Anspruch 1, wobei dem ersten und/ oder dem zweiten Teil des Abgases vor dem Einleiten in die Vorwärmzone (21) Sauerstoff zugeführt wird.

3. Verfahren nach einem der vorangehenden Ansprüche, wobei der zweite Teil des Abgases vor dem Einleiten in die Vorwärmzone (21) des Brennschachts auf etwa von 100mbar bis 600mbar, vorzugswiese 200mbar bis 550mbar, insbesondere 500mbar verdichtet wird.

4. Verfahren nach einem der vorangehenden Ansprüche, wobei der zweite Teil des Abgases am unteren Ende der Vorwärmzone (21) in diese eingeleitet wird.

5. Verfahren nach einem der vorangehenden Ansprüche, wobei der zweite Teil des Abgases vor dem Einleiten in den zweiten Abgaseinlass (15) auf eine Temperatur von 500°C bis 800°C, insbesondere 550°C bis 700°C, vorzugsweise 600°C erwärmt wird.

6. Verfahren nach einem der vorangehenden Ansprüche, wobei der zweite Teil des Abgases in einen Bereich der Vorwärmzone (21) eingeleitet wird, der eine Temperatur aufweist, die der Temperatur des zweiten Teils des Abgases entspricht und/ oder eine Temperatur von 500°C bis 800°C, insbesondere 550°C bis 700°C, vorzugsweise 600°C aufweist.

7. Verfahren nach einem der vorangehenden Ansprüche, wobei die Vorwärmzone (21) eine sich in Strömungsrichtung des Materials erstreckende Länge (A) aufweist und wobei der zweite Abgaseinlass (15) zum Einlassen von Abgas in die Vorwärmzone (21) in Strömungsrichtung des Materials einen Abstand (B) zu dem oberen Ende der Brennzone (20) aufweist und wobei das Verhältnis (B/A) des Abstandes (B) zu der Länge (A) 0 bis 0,5, insbesondere 0,2 bis 0,3, vorzugsweise 0,25 beträgt.

8. Verfahren nach einem der vorangehenden Ansprüche, wobei das in der Kühlzone (22) erwärmte Kühlgas über eine Kühlgasabzugseinrichtung (17) aus der Kühlzone (22) des Schachts (2) ausgelassen wird und wobei das aus der Kühlzone (22) ausgelassene Kühlgas einem Wärmetauscher (43) zur Erwärmung des zweiten Teils des Abgases zugeführt wird.

9. Gleichstrom-Gegenstrom-Regenerativ-Schachtofen (1) zum Brennen und Kühlen von Material, wie Karbonatgesteinen, mit zwei Schächten (2), die abwechselnd als Brennschacht und als Regenerativschacht betreibbar und mittels eines Verbindungskanals (19) miteinander verbunden sind,
wobei jeder Schacht (2) in Strömungsrichtung des Materials eine Vorwärmzone (21) zum Vorwärmen des Materials, eine Brennzone (20) zum Brennen des Materials und eine Kühlzone (22) zum Kühlen des Materials aufweist,
wobei zumindest ein Schacht (2) des GGR-Schachtofens (1) einen innerhalb oder oberhalb der Vorwärmzone (21) angeordneten Abgasauslass (6) zum Auslassen von Abgas aus dem Schacht (2) und einen ersten Abgaseinlass (12) zum Einlassen von Abgas aufweist, und
wobei der Abgasauslass (6) mit dem ersten Abgaseinlass (12) zum Einlassen eines ersten Teils des Abgases in die Vorwärmzone (21) verbunden ist **dadurch gekennzeichnet, dass**
der Schacht (2) innerhalb der Vorwärmzone (21) einen zweiten Abgaseinlass (15) in Strömungsrichtung des Materials hinter dem ersten Abgaseinlass (12) aufweist, der mit dem Abgasauslass (6) zum Einlassen eines zweiten Teils des Abgases in die Vorwärmzone (21) verbunden ist.

10. GGR- Schachtofen (1) nach Anspruch 9, wobei der Schachtofen (1) ein Regelorgan aufweist, das dem ersten und/ oder dem zweiten Abgaseinlass (12, 15) vorgeschaltet ist zur Regelung der Menge an Abgas, die der Vorwärmzone (21) des als Brennschacht betriebenen Schachts (2) und/ oder des als Regenerativschacht betriebenen Schachts (2) über den ersten und/ oder den zweiten Abgaseinlass (12, 15) zugeführt wird.

11. GGR- Schachtofen (1) nach einem der Ansprüche 9 bis 10, wobei der Schachtofen (1) zumindest eine Oxidationsmittelleitung (14) aufweist, die mit dem ersten und/ oder dem zweiten Abgaseinlass (12, 15) zur Einleitung eines Oxidationsmittels in das Abgas verbunden ist.

12. GGR- Schachtofen (1) nach einem der Ansprüche 9 bis 11, wobei dem zweiten Abgaseinlass (15) ein Verdichter vorgeschaltet ist, der derart ausgebildet und eingerichtet ist, dass er das Abgas vor dem Einleiten in den zweiten Abgaseinlass (15) des Brennschachts auf einen Druck von 100mbar bis 600mbar, vorzugswiese 200mbar bis 550mbar, insbesondere 500mbar verdichtet.

13. GGR- Schachtofen (1) nach einem der Ansprüche 9 bis 12, wobei der zweite Abgaseinlass (15) an dem unteren Ende der Vorwärmzone (21) angeordnet ist.

14. GGR- Schachtofen (1) nach einem der Ansprüche 9 bis 13, wobei zwischen dem Abgasauslass (6) und dem zweiten Abgaseinlass (15) ein Wärmetauscher (43) angeordnet ist, der derart ausgebildet und eingerichtet ist, dass er den zweiten Teil des Abgases auf eine Temperatur von 500°C bis 800°C, insbesondere 550°C bis 700°C, vorzugsweise 600°C erwärmt.

15. GGR- Schachtofen (1) nach einem der Ansprüche 9 bis 14, wobei die Vorwärmzone (21) eine sich in Strömungsrichtung des Materials erstreckende Länge (A) aufweist und wobei der zweite Abgaseinlass (15) zum Einlassen von Abgas in die Vorwärmzone (21) in Strömungsrichtung des Materials einen Abstand (B) zu dem oberen Ende der Brennzone (20) aufweist und wobei das Verhältnis (B/A) des Abstandes (B) zu der Länge (A) 0 bis 0,5, insbesondere 0,2 bis 0,3, vorzugsweise 0,25 beträgt.

16. Ofen (1) nach Anspruch 14, wobei die Kühlzone (22) einen Kühlgaseinlass (23) zum Einlassen von Kühlgas in die Kühlzone (22) und eine Kühlgasabzugseinrichtung (17) zum Abführen von Kühlgas aus dem Schacht (2) aufweist und wobei die Kühlgasabzugseinrichtung (17) mit dem Wärmetauscher (43) zur Erwärmung des zweiten Teils des Abgases verbunden ist.

## Claims

1. Method for firing material, such as carbonate rocks, in a co-current counter-current regenerative shaft kiln (1) with two shafts (2) which are operated alternately as a firing shaft and as a regenerative shaft and are connected to one another by means of a connecting channel (19), wherein the material flows through a material inlet (3) into a preheating zone (21) for preheating the material, a firing zone (20) for firing the material and a cooling zone (22) for cooling the material to a material outlet (40),
wherein a cooling gas is introduced into the cooling zone (22)
wherein exhaust gas is discharged from a shaft (2) of the kiln via an exhaust gas outlet (6) arranged within or above the preheating zone (21), and
wherein the exhaust gas discharged from the shaft (2) via the exhaust gas outlet (6) is branched into a first part of the exhaust gas and a second part of the exhaust gas, and
wherein the first part of the exhaust gas is fed to an upper region of the preheating zone (21) via a first exhaust gas inlet (12),
**characterized in that**
the second part of the exhaust gas discharged from the shaft (2) is fed to the preheating zone (21) via a second exhaust gas inlet (15) downstream of the first exhaust gas inlet (12).

2. The method according to claim 1, wherein oxygen is supplied to the first and/or the second part of the exhaust gas before it is introduced into the preheating zone (21).

3. Method according to one of the preceding claims, wherein the second part of the exhaust gas is compressed to approximately from 100mbar to 600mbar, preferably 200mbar to 550mbar, in particular 500mbar, before being introduced into the preheating zone (21) of the combustion shaft.

4. Method according to one of the preceding claims, wherein the second part of the exhaust gas is introduced into the preheating zone (21) at the lower end thereof.

5. Method according to one of the preceding claims, wherein the second part of the exhaust gas is heated to a temperature of 500°C to 800°C, in particular 550°C to 700°C, preferably 600°C, before being introduced into the second exhaust gas inlet (15).

6. Method according to one of the preceding claims, wherein the second part of the exhaust gas is introduced into a region of the preheating zone (21) which has a temperature corresponding to the temperature of the second part of the exhaust gas and/or has a temperature of 500°C to 800°C, in particular 550°C to 700°C, preferably 600°C.

7. Method according to one of the preceding claims, wherein the preheating zone (21) has a length (A) extending in the direction of flow of the material and wherein the second exhaust gas inlet (15) for admitting exhaust gas into the preheating zone (21) has a distance (B) from the upper end of the burning zone (20) in the direction of flow of the material and wherein the ratio (B/A) of the distance (B) to the length (A) is 0 to 0.5, in particular 0.2 to 0.3, preferably 0.25.

8. Method according to one of the preceding claims, wherein the cooling gas heated in the cooling zone (22) is discharged from the cooling zone (22) of the shaft (2) via a cooling gas discharge device (17) and wherein the cooling gas discharged from the cooling zone (22) is fed to a heat exchanger (43) for heating the second part of the exhaust gas.

9. Co-current counter-current regenerative shaft kiln (1) for firing and cooling material, such as carbonate rocks, with two shafts (2) which can be operated alternately as a firing shaft and as a regenerative shaft and are connected to one another by means of a connecting channel (19),
wherein each shaft (2) has a preheating zone (21) for preheating the material, a firing zone (20) for firing the material and a cooling zone (22) for cooling the material in the direction of flow of the material,
wherein at least one shaft (2) of the Co-current counter-current regenerative shaft kiln (1) has an exhaust gas outlet (6) arranged within or above the preheating zone (21) for discharging exhaust gas from the shaft (2) and a first exhaust gas inlet (12) for admitting exhaust gas, and
wherein the exhaust gas outlet (6) is connected to the first exhaust gas inlet (12) for admitting a first portion of the exhaust gas into the preheating zone (21)
**characterized in that**
the shaft (2) within the preheating zone (21) has a second exhaust gas inlet (15) in the flow direction of the material downstream of the first exhaust gas inlet (12), which is connected to the exhaust gas outlet (6) for admitting a second portion of the exhaust gas into the preheating zone (21).

10. Co-current counter-current regenerative shaft kiln (1) according to claim 9, wherein the shaft kiln (1) has a regulating element which is connected upstream of the first and/or the second exhaust gas inlet (12, 15) for regulating the quantity of exhaust gas which is fed to the preheating zone (21) of the shaft (2) operated as a combustion shaft and/or of the shaft (2) operated as a regenerative shaft via the first and/or the second exhaust gas inlet (12, 15).

11. Co-current counter-current regenerative shaft kiln (1) according to any one of claims 9 to 10, wherein the shaft kiln (1) comprises at least one oxidizing agent line (14) connected to the first and/or the second exhaust gas inlet (12, 15) for introducing an oxidizing agent into the exhaust gas.

12. Co-current counter-current regenerative shaft kiln (1) according to one of claims 9 to 11, wherein a compressor is connected upstream of the second exhaust gas inlet (15), which compressor is designed and set up in such a way that it compresses the exhaust gas to a pressure of 100 mbar to 600 mbar, preferably 200 mbar to 550 mbar, in particular 500 mbar, before it is introduced into the second exhaust gas inlet (15) of the combustion shaft.

13. Co-current counter-current regenerative shaft kiln (1) according to any one of claims 9 to 12, wherein the second exhaust gas inlet (15) is arranged at the lower end of the preheating zone (21).

14. Co-current counter-current regenerative shaft kiln (1) according to one of claims 9 to 13, wherein a heat exchanger (43) is arranged between the exhaust gas outlet (6) and the second exhaust gas inlet (15), which heat exchanger is designed and set up in such a way that it heats the second part of the exhaust gas to a temperature of 500°C to 800°C, in particular 550°C to 700°C, preferably 600°C.

15. Co-current counter-current regenerative shaft kiln (1) according to one of claims 9 to 14, wherein the preheating zone (21) has a length (A) extending in the direction of flow of the material and wherein the second exhaust gas inlet (15) for admitting exhaust gas into the preheating zone (21) has a distance (B) from the upper end of the firing zone (20) in the direction of flow of the material and wherein the ratio (B/A) of the distance (B) to the length (A) is 0 to 0.5, in particular 0.2 to 0.3, preferably 0.25.

16. Co-current counter-current regenerative shaft kiln (1) according to claim 14, wherein the cooling zone (22) comprises a cooling gas inlet (23) for admitting cooling gas into the cooling zone (22) and a cooling gas exhaust device (17) for discharging cooling gas from the shaft (2), and wherein the cooling gas exhaust device (17) is connected to the heat exchanger (43) for heating the second part of the exhaust gas.

## Revendications

1. Procédé de combustion d'un matériau, tel que des roches carbonatées, dans un four à cuves régénérateur à co-courant et à contre-courant (1) avec deux cuves (2) fonctionnant alternativement en tant que cuve de combustion et en tant que cuve de régénération et reliées entre elles au moyen d'un canal de liaison (19), le matériau s'écoulant à travers une entrée de matériau (3) dans une zone de préchauffage (21) pour préchauffer le matériau, une zone de combustion (20) pour brûler le matériau et une zone de refroidissement (22) pour refroidir le matériau vers une sortie de matériau (40), dans lequel un gaz de refroidissement est admis dans la zone de refroidissement (22)
dans lequel le gaz d'échappement est évacué d'une cuve (2) du four par une sortie de gaz d'échappement (6) agencée à l'intérieur ou au-dessus de la zone de préchauffage (21), et
dans lequel le gaz d'échappement évacué de la cuve (2) via la sortie de gaz d'échappement (6) est ramifié en une première partie du gaz d'échappement et une deuxième partie du gaz d'échappement, et
dans lequel la première partie du gaz d'échappement est amenée à une région supérieure de la zone de préchauffage (21) via une première entrée de gaz d'échappement (12), **caractérisé en ce que**
la deuxième partie du gaz d'échappement évacué de la cuve (2) est amenée à la zone de préchauffage (21) via une deuxième entrée de gaz d'échappement (15) en aval de la première entrée de gaz d'échappement (12).

2. Procédé selon la revendication 1, dans lequel de l'oxygène est ajouté à la première et/ou à la deuxième partie du gaz d'échappement avant son introduction dans la zone de préchauffage (21).

3. Procédé selon l'une quelconque des revendications précédentes, dans lequel la deuxième partie du gaz d'échappement est comprimée à environ 100 mbar à 600 mbar, de préférence 200 mbar à 550 mbar, notamment 500 mbar, avant d'être introduite dans la zone de préchauffage (21) de la cuve de combustion.

4. Procédé selon l'une quelconque des revendications précédentes, dans lequel la deuxième partie du gaz d'échappement est introduite dans la zone de préchauffage (21) à l'extrémité inférieure de celle-ci.

5. Procédé selon l'une quelconque des revendications précédentes, dans lequel la deuxième partie du gaz d'échappement est chauffée à une température de 500 °C à 800 °C, notamment de 550°C à 700°C, de préférence de 600 °C, avant d'être introduite dans la deuxième entrée de gaz d'échappement (15).

6. Procédé selon l'une quelconque des revendications précédentes, dans lequel la deuxième partie du gaz d'échappement est introduite dans une région de la zone de préchauffage (21) ayant une température correspondant à la température de la deuxième partie du gaz d'échappement et/ou ayant une température de 500 °C à 800 °C, notamment de 550°C à 700°C, de préférence de 600 °C.

7. Procédé selon l'une quelconque des revendications précédentes, dans lequel la zone de préchauffage (21) présente une longueur (A) s'étendant dans la direction d'écoulement du matériau, et dans lequel la deuxième entrée de gaz d'échappement (15) pour l'admission de gaz d'échappement dans la zone de préchauffage (21) présente dans la direction d'écoulement du matériau une distance (B) par rapport à l'extrémité supérieure de la zone de combustion (20), et dans lequel le rapport (B/A) de la distance (B) à la longueur (A) est de 0 à 0,5, notamment de 0,2 à 0,3, de préférence de 0,25.

8. Procédé selon l'une quelconque des revendications précédentes, dans lequel le gaz de refroidissement chauffé dans la zone de refroidissement (22) est évacué de la zone de refroidissement (22) de la cuve (2) par l'intermédiaire d'un dispositif d'extraction de gaz de refroidissement (17), et dans lequel le gaz de refroidissement évacué de la zone de refroidissement (22) est amené à un échangeur de chaleur (43) pour chauffer la deuxième partie du gaz d'échappement.

9. Four à cuves régénérateur à co-courant et à contre-courant (1) pour la combustion et le refroidissement de matériaux tels que des roches carbonatées, avec deux cuves (2) qui peuvent fonctionner alternativement en tant que cuve de combustion et en tant que cuve de régénération et qui sont reliées l'une à l'autre au moyen d'un canal de liaison (19),
dans lequel chaque cuve (2) comprend, dans la direction d'écoulement du matériau, une zone de préchauffage (21) pour préchauffer le matériau, une zone de combustion (20) pour brûler le matériau et une zone de refroidissement (22) pour refroidir le matériau,
dans lequel au moins une cuve (2) du four à cuves GGR (1) présente une sortie de gaz d'échappement (6) agencée à l'intérieur ou au-dessus de la zone de préchauffage (21) pour évacuer le gaz d'échappement de la cuve (2) et une première entrée de gaz d'échappement (12) pour l'introduction de gaz d'échappement, et
dans lequel la sortie de gaz d'échappement (6) est reliée à la première entrée de gaz d'échappement (12) pour admettre une première partie du gaz d'échappement dans la zone de préchauffage (21),
**caractérisé en ce que**
la cuve (2) présente, à l'intérieur de la zone de préchauffage (21), une deuxième entrée de gaz d'échappement (15) en aval de la première entrée de gaz d'échappement (12) dans la direction d'écoulement du matériau, qui est reliée à la sortie de gaz d'échappement (6) pour l'admission d'une deuxième partie du gaz d'échappement dans la zone de préchauffage (21).

10. Four à cuves GGR (1) selon la revendication 9, dans lequel le four à cuve (1) présente un organe de régulation qui est placé en amont de la première et/ou de la deuxième entrée de gaz d'échappement (12, 15) pour réguler la quantité de gaz d'échappement qui est amenée à la zone de préchauffage (21) de la cuve (2) fonctionnant en tant que cuve de combustion et/ou de la cuve (2) fonctionnant en tant que cuve de régénération via la première et/ou la deuxième entrée de gaz d'échappement (12, 15).

11. Four à cuves GGR (1) selon l'une quelconque des revendications 9 à 10, dans lequel le four à cuves (1) présente au moins une conduite d'oxydant (14) reliée à la première et/ou à la deuxième entrée de gaz d'échappement (12, 15) pour introduire un oxydant dans le gaz d'échappement.

12. Four à cuves GGR (1) selon l'une quelconque des revendications 9 à 11, dans lequel la deuxième entrée de gaz d'échappement (15) est précédée d'un compresseur qui est configuré et adapté de telle sorte qu'il comprime les gaz d'échappement à une pression de 100 mbar à 600 mbar, de préférence de 200 mbar à 550 mbar, notamment de 500 mbar, avant de les introduire dans la deuxième entrée de gaz d'échappement (15) de la cuve de combustion.

13. Four à cuves GGR (1) selon l'une quelconque des revendications 9 à 12, dans lequel la deuxième entrée de gaz d'échappement (15) est agencée à l'extrémité inférieure de la zone de préchauffage (21).

14. Four à cuves GGR (1) selon l'une quelconque des revendications 9 à 13, dans lequel, entre la sortie de gaz d'échappement (6) et la deuxième entrée de gaz d'échappement (15), est agencé un échangeur de chaleur (43) qui est configuré et adapté de manière à chauffer la deuxième partie du gaz d'échappement à une température de 500 °C à 800 °C, notamment de 550 °C à 700 °C, de préférence de 600 °C.

15. Four à cuves GGR (1) selon l'une quelconque des revendications 9 à 14, dans lequel la zone de préchauffage (21) présente une longueur (A) s'étendant dans la direction d'écoulement du matériau, et dans lequel la deuxième entrée de gaz d'échappement (15) pour l'admission de gaz d'échappement dans la zone de préchauffage (21) présente dans la direction d'écoulement du matériau une distance (B) par rapport à l'extrémité supérieure de la zone de combustion (20), et dans lequel le rapport (B/A) de la distance (B) à la longueur (A) est de 0 à 0,5, notamment de 0,2 à 0,3, de préférence de 0,25.

16. Four (1) selon la revendication 14, dans lequel la zone de refroidissement (22) présente une entrée de gaz de refroidissement (23) pour l'admission de gaz de refroidissement dans la zone de refroidissement (22) et un dispositif d'extraction de gaz de refroidissement (17) pour l'évacuation du gaz de refroidissement hors de la cuve (2), et dans lequel le dispositif d'extraction de gaz de refroidissement (17) est raccordé à l'échangeur de chaleur (43) pour le chauffage de la deuxième partie des gaz d'échappement.
